# EUROPEAN PATENT SPECIFICATION

(11) **EP 3 723 102 B1**
(45) Date of publication and mention of the grant of the patent: **05.02.2025**
(21) Application number: 17909659.9
(22) Date of filing: 08.12.2017
(51) Int. Cl.: G21F 9/32, G21F 9/00, G21F 9/14, G21F 9/30

(54) **RADIOACTIVE WASTE REPROCESSING UNIT**
EINHEIT ZUR VERWERTUNG VON RADIOAKTIVEM ABFALL
INSTALLATION DE RETRAITEMENT DE DECHETS RADIOACTIFS

(30) Priority: 06.12.2017 RU 2017142623
(43) Date of publication of application: 14.10.2020
(73) Proprietor: Joint Stock Company "Rosenergoatom", Moscow 109507 (RU); Joint Stock Company "Science and Innovations", Moscow 119180 (RU)
(72) Inventor: POLKANOV, Mikhail Anatol'evich, Moskovskaya obl. 141303 (RU); ROZIN, Vladimir Nikolaevich, Novovoronezh Voronezhskaya obl. 396072 (RU); SHAROV, Aleksandr Nikitovich, Novovoronezh Voronezhskaya obl. 396072 (RU); SHCHUKIN, Aleksandr Pavlovich, Novovoronezh Voronezhskaya obl. 396072 (RU)
(74) Representative: Friese Goeden Patentanwälte PartGmbB
(86) International application number: PCT/RU2017/000914
(87) International publication number: WO 2019/112462

(56) References cited:
- CN-A- 102 157 215
- CN-A- 102 157 215
- CN-A- 104 637 561
- KR-A- 20010 092 852
- RU-C- 1 810 391
- US-A1- 2008 257 235

## Description

The alleged invention is related to nuclear power generation technologies and can be used for recycling of low and medium radioactivity waste, in particular, nuclear waste from VVER and RBMK reactors and other nuclear installations.

A system for treatment of radioactive and toxic waste which contains cellulose, polymeric compounds, resin, PVC and non-flammable admixtures, such as glass and metals is known wherein the generated combustion residues are further melted to transform into a solid mass (patent RF No 2107347).

Disadvantages of this system are as follows: low capacity of the feed system, large volume of flue gases, insufficient purification of flue gases from aerosol impurities and radioactive nuclides, lack of automatic or automated mode for recycling of radioactive waste.

The closest equivalent of the alleged invention is a nuclear waste recycling installation described in patent RF No 2320038, the installation contains the following equipment: a feed system, a plasma shaft-type furnace with a melter located in the hearth of the furnace and a slag discharge unit connected to the receiving tank for molten slag; an air supply unit to the furnace and pyrolysis gas combustion chamber; evaporative heat exchanger for sharp reduction of flue gas temperature; gas purification unit with a sock-type filter, a heat exchanger and a scrubber, pumps and tanks for chemical agents and recycled products, fittings.

Disadvantages of this technical solution are as follows: lack of possibility to alter or reconfigure the nuclear waste recycling process depending on the type of waste; low efficiency of waste recycling and low wear-resistance due to critically high operational parameters.

The objective of the alleged invention is to extend the functionality, enhance wear-resistance and efficiency of the recycling plant. The technical result of the invention is to design a flexible operation mode in which nuclear waste with different radioactivity level would be recycled in automatic or automated mode, and to ensure increased wear-resistance of the plant components.

This technical result is achieved in the radioactive waste recycling plant which consist of the following components: a waste feed unit, a plasma shaft-type furnace with a melter in the hearth of the furnace and a slug discharge unit connected with a receiving tank for molten slug; an air supply unit delivering air to the furnace to a pyrolysis gas combustion chamber; an evaporative heat exchanger for sharp reduction of the flue gases temperature; a gas purification unit with a sock-type filter; a heat-exchanger and a scrubber; pumps and tanks for agents and recycled products; fittings; the recycling plant (in accordance with the invention) is additionally equipped with, at least, one control module which is electrically connected to the slug discharge control module, an interior environment control module, an equipment status control module and, at least, one gas analytical module. The control module is electrically connected with the electric hardware of a waste feed unit, a plasma shaft-type furnace, a receiving tank for molten slug and with the electric hardware of the air supply unit which delivers the air to the furnace and to the combustion chamber, and the slug discharge control is electrically connected with the electric hardware of the slug discharge unit.

A control module for a slag discharge unit may include a digital video recorder, a temperature sensor for discharged slag, optical monitoring sensors located inside the receiving tank for molten slag; a light alarm system with lighting columns and an emergency button.

An interior environment control module may include, at least, temperature, pressure, flow and rarefication sensors, one sensor of each category.

An equipment status control module may include, at least, one fittings position transmitter and one pump control sensor.

A gas analytical module may include the following sensors: measuring sensors for gas concentration (oxygen, carbon monoxide, carbon dioxide, nitrogen oxide, nitrogen dioxide, aggregate concentration of nitrogen oxide, sulfur dioxide and aggregate concentration of hydrocarbons). The location for installation of the gas analytical module can chosen to provide for the monitoring of pyrolysis gas composition in the gas stack between the plasma shaft-type furnace and the combustion chamber, and/or to provide for the monitoring of flue gases in the gas stack between the combustion chamber and the evaporative heat exchanger, and/or at the outlet of the recycling plant.

Control module can be equipped by a data storage unit and data displaying screen, control module is a controller and/or computer, wherein inputs of the control module are electrically connected to the outputs of the slug discharge control module, interior environment control module, equipment status control module and, at least, to one gas analytical module. The outputs of the control module are electrically connected with the electric hardware inputs of the following equipment: a waste feed unit, a plasma shaft-type furnace, a receiving tank for molten slug, an air supply unit delivering air to the furnace and to the combustion chamber.

A waste feed unit may be equipped with a feed tank and a feed conveyor belt. The feed tank may be equipped with, at least, one proximity sensor and, at least, two airtight sliding shutters, a thermal screen and a feed spout.

A plasma shaft-type furnace may be equipped with centrifugal jet nozzles, which are part of the emergency sprinkle system and are installed in the upper part of the furnace.

The pyrolysis gas combustion chamber may be equipped with a pre-chamber and a plasma generator located in the top cover of pre-chamber, and with an additional air supply unit.

A gas purification unit may be additionally equipped with a separator filter and, at least, one fine filter.

A plasma shaft-type furnace and a combustion chamber may be additionally equipped with a gas discharge duct with emergency gas discharge valves and an emergency system of absorption purification, and the slug discharge unit may include a discharge block with a central hole and a stopper.

A plasma shaft-type furnace may have a split design and be equipped with, at least, one plasma generator (80-170 kWt), moreover, the furnace melter can be designed to enable its relocation if necessary, and the connection section between the slug discharge unit and the receiving tank for molten slag can also have a split design.

A waste feed unit may be equipped with a hopper to supply liquid flammable radioactive waste to the plasma shaft-type furnace.

Integration of, at least, one control module will provide for the automation of radioactive waste recycling.

Integration of a gas analytical module will allow for selecting the best operational parameters for the recycling plant.

An overall waste recycling plant layout is represented in below Figure.

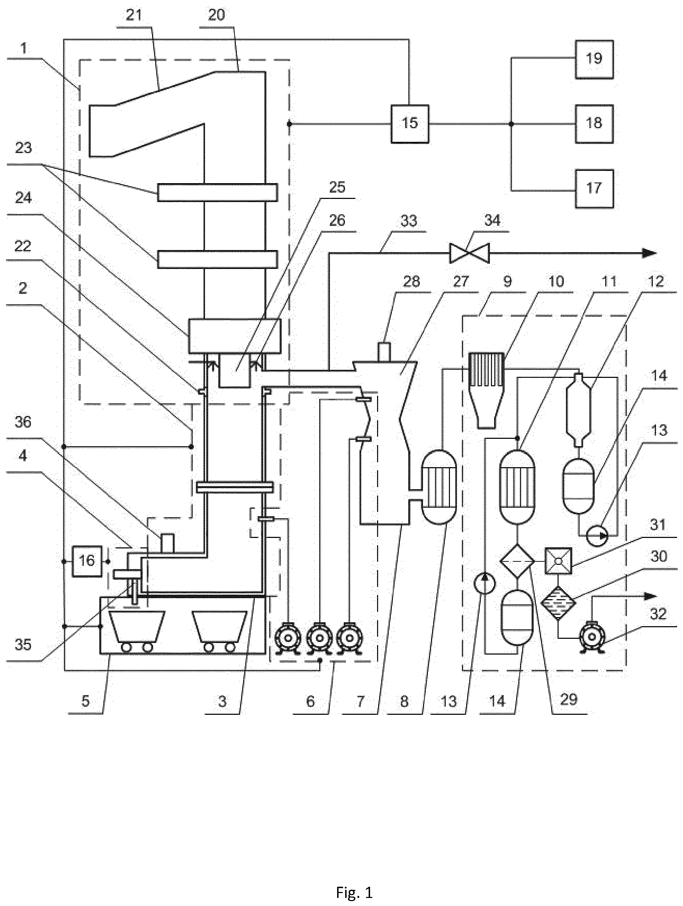

A radioactive waste recycling plant includes a waste feed unit (1), a plasma shaft-type furnace (2) with a melter (3) in the hearth and a slug discharge unit (4) which is connected to the receiving tank (5) for molten slug, an air supply unit (6) to supply air to the furnace (2) and to a pyrolysis gas combustion chamber (7), an evaporative heat exchanger (8) for sharp reduction of flue gas temperature, gas purification system (9) and fittings (not shown). A gas purification unit includes a sock-type filter (10), a heat exchanger (11), a scrubber (12), pumps (13) and tanks (14) for chemical agents and recycled products. A radioactive waste recycling plant also includes a control module (15) and the below listed modules which are electrically connected to the control module (15): a control module (16) for slug discharge unit (4); an interior environment control module (17); an equipment status control module (18) and a gas analytical module (19). The control module (15) is electrically connected to electric hardware of the following units: a waste feed unit (1), a plasma shaft-type furnace (2), a receiving tank for molten slug (5), an air supply unit (6) which supplies the air to the furnace (2) and to the combustion chamber (7). A control module (16) for a slag discharge unit (4) is electrically connected to the electric hardware of a slag discharge unit (4) and may include a digital video recorder, a temperature sensor for discharged slag, optical monitoring sensors (not shown in the figure) located inside the receiving tank for molten slag; a light alarm system with lighting columns and an emergency button.

An interior environment control module (17) may include, at least, temperature, pressure, flow and rarefication sensors (not shown in the figure), one sensor of each category.

An equipment status control module (18) may include, at least, one fittings position transmitter and one pump control sensor (not shown in the figure).

A gas analytical module (19) includes concentration measuring sensors for the following gas: oxygen, carbon monoxide, carbon dioxide, nitrogen oxide, nitrogen dioxide, aggregate concentration of nitrogen oxide, sulfur dioxide and aggregate concentration of hydrocarbons (not shown in the figure). The location for installation of the gas analytical module (19) can be chosen to provide for the monitoring of pyrolysis gas composition in the gas stack between the plasma shaft-type furnace (2) and the combustion chamber (7), and/or to provide for the monitoring of flue gases in the gas stack between the combustion chamber (7) and the evaporative heat exchanger (8), and/or at the outlet of the recycling plant.

A control module (15) may be equipped with a data storage device and a data output module in a form of a display, either a PC and/or a controller can be used as a control module (15). Inputs of the control module (15) are electrically connected to outputs of the slug discharge control module (16), the interior environment control module (17), the equipment status control module (18), and the gas analytical module (19)wherein the outputs of the control module (15) are electrically connected with the electric hardware inputs of the waste feed unit (1), a plasma shaft-type furnace (2), a receiving tank (5) for molten slug, the air supply unit (6) delivering air to the furnace (2) and to the pyrolysis gas combustion chamber (7).

A waste feed unit (1) may be equipped with a feed tank (20) and a feed conveyor belt (21). The feed tank (20) may be equipped with, at least, one proximity sensor (22) and, at least, two airtight sliding shutters (23), a thermal screen (24) and a feed spout (25). A plasm shaft-type furnace (2) may be equipped with centrifugal jet nozzles (26) which are part of the emergency spray system and are installed in the upper part of the furnace.

The pyrolysis gas combustion chamber (7) may be equipped with a pre-chamber (27) and a plasma generator (28) located in the top cover of pre-chamber (27).

For more efficient combustion of pyrolysis gas the combustion chamber (7) can be additionally equipped with an air supply unit (6). At this point the air inlet from the air supply unit (6) can be made at the same level with the pyrolysis gas inlet in the pre-chamber (27), and an additional air inlet from the air supply unit (6) can be located in the upper part of the base volume of the combustion chamber (7). An air inlet from the air supply unit (6) to the plasma shaft-type furnace (2) is located in the bottom of the furnace.

A gas purification unit (9) can be additionally equipped with a separator filter (29) and, at least, one fine filter (30), and gas mixers (31) and exhaust fans (32).

The plasma shaft-type furnace (2) and pyrolysis gas combustion chamber (7) are equipped with a gas discharge duct (33) with emergency gas discharge valves (34) and an emergency system of absorption purification.

The slug discharge unit (4) may include a discharge block (35) with a central hole and a stopper.

A plasma shaft-type furnace (2) has a split design and is equipped with, at least, one plasma generator (36) (80-170 kWt), moreover, the furnace melter (3) can be designed to enable its relocation if necessary, for example, it can be placed on a portable trolley. Moreover, the connection section between the slug discharge unit (4) and the receiving tank (5) for molten slag also has a split design.

A waste feed unit (1) may be equipped with a hopper to supply liquid flammable radioactive waste to the plasma shaft-type furnace (2).

The air supply unit (6) supplying air to the furnace (2) and to the combustion chamber (7) includes blow fans.

The recycling plant functions as follows: Solid radioactive waste packed in craft bags are sent to the waste feed unit (1) where the operating personnel in consecutive stages put these bags onto the conveyor (21) to be further delivered to the feed tank (20). The control module (15) sends commands to the feed unit (1) which loads the portions of packed radioactive waste into the furnace (2). The plasma shaft-type furnace (2) includes all stages of conversion for radioactive waste: drying, pyrolysis, oxidation of coking residues and slug melting. The result of recycling process are the molten slug and pyrolysis gas.

The temperature at all stages of waste conversion is controlled with the control module (15). The blast air is supplied through the inlets of the air supply unit (6) which supplies the air to the furnace (2) and to the combustion chamber (7), the direction of blast air flow can be regulated by means of flaps. The molten slug is accumulated in the melter (3). The heating of the melter is provided with, at least, one plasma generator (36) with rated power of 80-170 kWt. From the melter (3) the molten slug passes through the slug discharge unit (4) and is fed to the airtight receiving tank (5) for molten slug. The slug discharge unit (4) is controlled by the slug discharge control module (16) which, in turn, is controlled by the control module (15). The molten slug is collected in metal containers with further holdup and cooling. Containers with molten slug are removed from the receiving tank (5) and by means of a manipulator are loaded into a non-returnable shielding container. All components of slug discharge unit (4) are controlled by means of the control module (15).

Pyrolysis gas generated inside the shaft-type furnace (2) is fed to the combustion chamber (7). The source of heat in the combustion chamber (7) is a plasma generator (28). At a start-up stage two fuel supply nozzles (not shown in the figure) are used together with the plasma generator (28) to speed up the heating of the pyrolysis gas combustion chamber (7) and suppress the nitrogen oxides which are generated as a result of operation of, at least, one plasma generator (28). Functioning of fuel supply nozzles is supported with a diesel supply system and a compressed air supply system.

The blast air is supplied to the pre-chamber (27) through the air supply unit (6) inlets located in the upper and lower part of the combustion chamber (7). Flue gases heated in the combustion chamber (7) up to the temperature of +1200 - 1350°C are fed to the evaporative heat exchanger (8) where their temperature is sharply reduced up to +200 - 250°C. Cooling is ensured by means of complete evaporation of water sprayed by pneumatic nozzles which are located in the upper part of the evaporative heat exchanger (8). After the evaporative heat exchanger (8) the flue gases are delivered to the sock-type filter (10) where most of solid aerosol particles (dust) are captured. Flue gases purified in the sock-type filter (10) are supplied to the scrubber (12) where the downstream gas flow is intensively sprayed with 4% alkaline solution.

In the scrubber (12) the flue gases are cooled up to 50±5°C and additionally purified from acid gases and aerosols. After the scrubber (12) the flue gases are cooled up to 25 - 35 °C in the tube side of the heat exchanger (11). In the separator filter (29) cooled flue gases are separated from condensed moisture. In the gas mixers (31) the flue gases are heated and mixed with hot air, then flue gases pass fine filtration stage (30) and with exhaust fans they are directed to a ventilation stack.

Gas analytical modules (19) provide for the control over the condition of interior environment, in particular, they allow for assessment of concentration and identification of gases generated as a result of waste recycling process. Gas analytical modules (19) are stationary continuously-operated plants used for measuring concentration of the following gases: O₂ (oxygen), CO (carbon oxide), CO₂ (carbon dioxide), NO (nitrogen oxide), NO₂ (nitrogen dioxide), NOₓ (aggregate concentration of nitrogen oxides), SO₂ (sulfur dioxide) 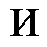 CH (aggregate concentration of hydrocarbons). For measurement of CO, CO₂, CH₄ and SO₂ concentration an infrared absorption method is used, for NO, NO₂ and NOₓ - measurement a chemiluminescent method is used, for measurement of CH concentration a flame ionization method is used. Sampling method can be described as forced sampling and it involves using a flow booster. A sampling system provides for the filtration of the sample of mechanical impurities, removal of water vapors (for CO, CO₂, SO₂, CH₄ and O₂ measurement), delivering the sample to the measurement channel free from condensed water vapors, delivering the sample to CH measurement channel at a temperature of (190 ± 10) °C.

Control and monitoring of the plant operation is provided with the control module (15) which is connected with the interior environment control module (17), which, in turn, is connected with the interior environment sensors (not shown in the figure). Information about the condition of the interior environment is displayed on the screen of the interior environment control module (17).

Functioning of the equipment status control module (18) depends on the information sent by the interior environment control module (17) to the control module (15), which, in accordance with integrated algorithms, generates command electric signals forwarded to the equipment status control module (18) Further on the equipment status control module (18), in accordance with its integrated algorithms, generates a corresponding control signal for the purpose to influence the operation of the respective equipment. When the necessary parameters of the interior environment are reached, the interior environment control sensors acquire this information and forward it to the interior environment control module (17). After that the interior environment control module (17) registers the information about the fact that the necessary parameters of the interior environment have been reached, and sends a respective signal to the control module (15) The control module (15) upon receipt of this signal sends a command to the equipment status control module (18) to cease its influence to the equipment.

Utilization of the alleged invention allows to provide a flexible operational mode for the radioactive waste recycling plant.

## Claims

1. A radioactive waste recycling plant which consists of the following components: a waste feed unit (1), a plasma shaft-type furnace (2) with a melter (3) in the hearth of the furnace and a slug discharge unit (4) connected with a receiving tank (5) for molten slug; an air supply unit (6) for delivering air to the furnace (2) to a pyrolysis gas combustion chamber (7); an evaporative heat exchanger (8) for sharp reduction of the flue gases temperature; a gas purification unit (9) with a sock-type filter (10); a heat-exchanger (11) and a scrubber (12); pumps (13) and tanks (14) for agents and recycled products; fittings; the recycling plant, **characterized in that** it is additionally equipped with, at least, one control module (15) which is electrically connected to a slug discharge control module (16), an interior environment control module (17), an equipment status control module (18) and, at least, one gas analytical module (19), wherein the control module (15) is electrically connected with the electric hardware of the waste feed unit (1), the plasma shaft-type furnace (2), the receiving tank (5) for molten slug and with the electric hardware of the air supply unit (6) which delivers the air to the furnace (2) and to the combustion chamber (7), and the slug discharge control module (16) is electrically connected with the electric hardware of the slug discharge unit (4).

2. Radioactive waste recycling plant according to claim 1 **characterized in that** the slug discharge control module (16) includes a digital video recorder, a temperature sensor for discharged slag, optical monitoring sensors located inside the receiving tank for molten slag; a light alarm system with lighting columns and an emergency button.

3. Radioactive waste recycling plant according any of the preceding claims **characterized by** the interior environment control module (17) which includes, at least, temperature, pressure, flow and rarefication sensors, one sensor of each category.

4. Radioactive waste recycling plant according any of the preceding claims **characterized by** an equipment status control module (18) which includes, at least, one fittings position transmitter and one pump control sensor.

5. Radioactive waste recycling plant according any of the preceding claims **characterized by** a gas analytical module (19) which includes the following sensors: measuring sensors for gas concentration of oxygen, carbon monoxide, carbon dioxide, nitrogen oxide, nitrogen dioxide, aggregate concentration of nitrogen oxide, sulfur dioxide and aggregate concentration of hydrocarbons,
wherein the location for installation of the gas analytical module can be chosen to provide for the monitoring of pyrolysis gas composition in the gas stack between the plasma shaft-type furnace (2) and the combustion chamber (7), and/or to provide for the monitoring of flue gases in the gas stack between the combustion chamber (7) and the evaporative heat exchanger (8), and/or at the outlet of the recycling plant.

6. Radioactive waste recycling plant according any of the preceding claims **characterized in that** the control module (15) is equipped with a data storage device and a data output module in a form of a display, either a PC and/or a controller is used as the control module (15).

7. Radioactive waste recycling plant according any of the preceding claims **characterized in that** inputs of the control module (15) are electrically connected to outputs of the slug discharge control module (16), the interior environment control module (17), the equipment status control module (18) and, at least, to the gas analytical module (19), whereinthe outputs of the control module (15) are electrically connected with the electric hardware inputs of the following equipment: the waste feed unit (1), the plasma shaft-type furnace (2), the receiving tank (5) for molten slug, the air supply unit (6) for delivering air to the furnace (2) and to the combustion chamber (7).

8. Radioactive waste recycling plant according any of the preceding claims **characterized in that** the waste feed unit (1) is equipped with a feed tank (20) and a conveyor belt (21) connected therewith.

9. Radioactive waste recycling plant according any of the preceding claims **characterized in that** the waste feed unit (1) is equipped with a feed tank (20) and a feed conveyor belt (21), whereinthe feed tank (20) is equipped with, at least, one proximity sensor (22) and, at least, two airtight sliding shutters (23), a thermal screen (24) and a feed spout (25).

10. Radioactive waste recycling plant according any of the preceding claims **characterized in that** the plasma shaft-type furnace (2) is equipped with centrifugal jet nozzles (26) which are part of the emergency spray system and are installed in the upper part of the furnace.

11. Radioactive waste recycling plant according any of the preceding claims **characterized in that** the pyrolysis gas combustion chamber (7) is equipped with a pre-chamber (27) and a plasma generator (28) located in the top cover of pre-chamber (27), and with an additional air supply unit (6).

12. Radioactive waste recycling plant according any of the preceding claims **characterized in that** the gas purification unit (9) is additionally equipped with a separator filter (29) and, at least, one fine filter (30).

13. Radioactive waste recycling plant according any of the preceding claims **characterized in that** the plasma shaft-type furnace (2) and pyrolysis gas combustion chamber (7) are equipped with a gas discharge duct (33) with emergency gas discharge valves (34) and an emergency system of absorption purification.

14. Radioactive waste recycling plant according any of the preceding claims **characterized in that** the slug discharge unit may include a discharge block with a central hole and a stopper.

15. Radioactive waste recycling plant according any of the preceding claims **characterized in that** the plasma shaft-type furnace (2) has a split design and is equipped with, at least, one plasma generator (36), wherein the furnace melter (3) is designed to enable its relocation if necessary, and the connection section between the slug discharge unit (4) and the receiving tank (5) for molten slag has a split design.

## Patentansprüche

1. Anlage zum Wiederverwerten von radioaktivem Abfall, die aus den folgenden Komponenten besteht: einer Abfalleinspeiseeinheit (1), einem Plasma-Schachtofen (2) mit einem Schmelzofen (3) im Schmelzraum des Ofens und einer Schlackenabführeinheit (4), die mit einem Aufnahmetank (5) für geschmolzene Schlacke verbunden ist; einer Luftzuführeinheit (6) zum Liefern von Luft zum Ofen (2) zu einer Pyrolysegas-Brennkammer (7); einem Verdampfungswärmetauscher (8) zur starken Reduzierung der Rauchgastemperatur; einer Gasreinigungseinheit (9) mit einem Strumpffilter (10); einem Wärmetauscher (11) und einem Wäscher (12); Pumpen (13) und Tanks (14) für Mittel und recycelte Produkte; Armaturen; wobei die Wiederverwertungsanlage **dadurch gekennzeichnet ist, dass** sie zusätzlich mit mindestens einem Steuermodul (15) ausgestattet ist, das elektrisch mit einem Steuermodul (16) zum Abführen von Schlacke, einem Steuermodul (17) für die Innenraumumgebung, einem Steuermodul (18) für den Einrichtungsstatus und mindestens einem Modul (19) zur Analyse von Gas verbunden ist, wobei das Steuermodul (15) elektrisch mit der elektrischen Hardware der Abfalleinspeiseeinheit (1), dem Plasma-Schachtofen (2), dem Aufnahmetank (5) für geschmolzene Schlacke und mit der elektrischen Hardware der Luftzuführeinheit (6), die die Luft zum Ofen (2) und zur Brennkammer (7) liefert, verbunden ist und das Steuermodul (16) zum Abführen von Schlacke elektrisch mit der elektrischen Hardware der Schlackenabführeinheit (4) verbunden ist.

2. Anlage zum Wiederverwerten von radioaktivem Abfall nach Anspruch 1, **dadurch gekennzeichnet, dass** das Steuermodul (16) zum Abführen von Schlacke einen digitalen Videorekorder, einen Temperatursensor für abgeführte Schlacke, optische Überwachungssensoren, die im Inneren des Aufnahmetanks für geschmolzene Schlacke angeordnet sind, ein Lichtalarmsystem mit Beleuchtungssäulen und einen Notschalter aufweist.

3. Anlage zum Wiederverwerten von radioaktivem Abfall nach einem der vorhergehenden Ansprüche, **gekennzeichnet durch** das Steuermodul (17) für die Innenraumumgebung, das zumindest Temperatur-, Druck-, Durchfluss- und Verdünnungssensoren aufweist, und zwar einen Sensor von jeder Kategorie.

4. Anlage zum Wiederverwerten von radioaktivem Abfall nach einem der vorhergehenden Ansprüche, **gekennzeichnet durch** ein Steuermodul (18) für den Einrichtungsstatus, das mindestens einen Transmitter für die Position der Armaturen und einen Sensor zum Steuern der Pumpe aufweist.

5. Anlage zum Wiederverwerten von radioaktivem Abfall nach einem der vorhergehenden Ansprüche, **gekennzeichnet durch** ein Modul (19) zur Analyse von Gas, das die folgenden Sensoren aufweist: Sensoren zum Messen der Gaskonzentration von Sauerstoff, Kohlenmonoxid, Kohlendioxid, Stickstoffoxid, Stickstoffdioxid, die Gesamtkonzentration von Stickstoffoxid, Schwefeldioxid und die Gesamtkonzentration von Kohlenwasserstoffen, wobei der Ort für die Installation des Moduls zur Analyse von Gas so gewählt werden kann, dass die Überwachung der Pyrolysegaszusammensetzung im Gasschacht zwischen dem Plasma-Schachtofen (2) und der Brennkammer (7) vorgesehen ist und/oder dass die Überwachung der Rauchgase im Gasschacht zwischen der Brennkammer (7) und dem Verdampfungswärmetauscher (8) und/oder am Auslass der Wiederverwertungsanlage vorgesehen ist.

6. Anlage zum Wiederverwerten von radioaktivem Abfall nach einem der vorhergehenden Ansprüche, **dadurch gekennzeichnet, dass** das Steuermodul (15) mit einer Datenspeichervorrichtung und einem Datenausgangsmodul in Form einer Anzeige ausgestattet ist, wobei entweder ein PC und/oder eine Steuerung als Steuermodul (15) verwendet wird.

7. Anlage zum Wiederverwerten von radioaktivem Abfall nach einem der vorhergehenden Ansprüche, **dadurch gekennzeichnet, dass** Eingänge des Steuermoduls (15) elektrisch mit Ausgängen des Steuermoduls (16) zum Abführen von Schlacken, des Steuermoduls (17) für die Innenraumumgebung, des Steuermoduls (18) für den Einrichtungsstatus und zumindest mit dem Modul (19) zur Analyse von Gas verbunden sind, wobei die Ausgänge des Steuermoduls (15) elektrisch mit den elektrischen Hardware-Eingängen der folgenden Einrichtungen verbunden sind: der Abfallzuführeinheit (1), dem Plasma-Schachtofen (2), dem Aufnahmetank (5) für geschmolzene Schlacke, der Luftzuführeinheit (6) zum Liefern von Luft zum Ofen (2) und mit der Brennkammer (7).

8. Anlage zum Wiederverwerten von radioaktivem Abfall nach einem der vorhergehenden Ansprüche, **dadurch gekennzeichnet, dass** die Abfalleinspeiseeinheit (1) mit einem Einspeisetank (20) und einem damit verbundenen Förderband (21) ausgestattet ist.

9. Anlage zum Wiederverwerten von radioaktivem Abfall nach einem der vorhergehenden Ansprüche, **dadurch gekennzeichnet, dass** die Abfalleinspeiseeinheit (1) mit einem Einspeisetank (20) und einem Einspeiseförderband (21) ausgestattet ist, wobei der Einspeisetank (20) mit mindestens einem Näherungssensor (22) und mindestens zwei luftdichten Gleitschiebern (23), einer Wärmeabschirmung (24) und einer Einspeiseöffnung (25) ausgestattet ist.

10. Anlage zum Wiederverwerten von radioaktivem Abfall nach einem der vorhergehenden Ansprüche, **dadurch gekennzeichnet, dass** der Plasma-Schachtofen (2) mit Zentrifugalstrahldüsen (26) ausgestattet ist, die Teil des Notfallsprühsystems sind und im oberen Teil des Ofens installiert sind.

11. Anlage zum Wiederverwerten von radioaktivem Abfall nach einem der vorhergehenden Ansprüche, **dadurch gekennzeichnet, dass** die Pyrolysegas-Brennkammer (7) mit einer Vorkammer (27) und einem Plasmagenerator (28), der in der oberen Abdeckung der Vorkammer (27) angeordnet ist, sowie mit einer zusätzlichen Luftzuführeinheit (6) ausgestattet ist.

12. Anlage zum Wiederverwerten von radioaktivem Abfall nach einem der vorhergehenden Ansprüche, **dadurch gekennzeichnet, dass** die Gasreinigungseinheit (9) zusätzlich mit einem Abscheidefilter (29) und mindestens einem Feinfilter (30) ausgestattet ist.

13. Anlage zum Wiederverwerten von radioaktivem Abfall nach einem der vorhergehenden Ansprüche, **dadurch gekennzeichnet, dass** der Plasma-Schachtofen (2) und die Pyrolysegas-Brennkammer (7) mit einem Gasabführkanal (33) mit Notfall-Gasablassventilen (34) und einem Notfallsystem zur Reinigung durch Absorption ausgestattet sind.

14. Anlage zum Wiederverwerten von radioaktivem Abfall nach einem der vorhergehenden Ansprüche, **dadurch gekennzeichnet, dass** die Schlackenabführeinheit einen Abführblock mit einem zentralen Loch und einem Stopfen aufweisen kann.

15. Anlage zum Wiederverwerten von radioaktivem Abfall nach einem der vorhergehenden Ansprüche, **dadurch gekennzeichnet, dass** der Plasma-Schachtofen (2) eine geteilte Bauweise aufweist und mit mindestens einem Plasmagenerator (36) ausgestattet ist, wobei der Schmelzofen (3) des Ofens so ausgelegt ist, dass er bei Bedarf versetzt werden kann, und der Verbindungsabschnitt zwischen der Schlackenabführeinheit (4) und dem Aufnahmetank (5) für geschmolzene Schlacke eine geteilte Bauweise aufweist.

## Revendications

1. Installation de recyclage des déchets radioactifs, comprenant les éléments suivants :
une unité d'alimentation en déchets (1), un four à plasma (2) vertical ayant un fondoir (3) dans la sole du four, et une unité d'évacuation de scories (4) reliée à un réservoir (5) de réception des scories fondues ; une unité d'alimentation en air (6) fournissant de l'air au four (2) dans une chambre de combustion de gaz de pyrolyse (7) ; un échangeur de chaleur par évaporation (8) pour une forte réduction de la température des gaz de combustion ; une unité de purification de gaz (9) ayant un filtre (10) en forme de manchon ; un échangeur de chaleur (11) et un laveur (12) ; des pompes (13) et des réservoirs (14) pour les agents et les produits recyclés ; des raccords ;
l'installation de recyclage étant **caractérisée en ce qu'**elle est en outre équipée d'au moins un module de commande (15) relié électriquement à un module de commande de l'évacuation de scories (16), d'un module de commande de l'environnement intérieur (17), d'un module de commande de l'état de l'équipement (18) et d'au moins un module d'analyse de gaz (19), le module de commande (15) étant relié électriquement au matériel électrique de l'unité d'alimentation en déchets (1), du four à plasma (2) vertical, du réservoir (5) de réception des scories fondues et au matériel électrique de l'unité d'alimentation en air (6) qui fournit l'air au four (2) et à la chambre de combustion (7), et le module de commande de l'évacuation de scories (16) étant relié électriquement au matériel électrique de l'unité d'évacuation de scories (4).

2. Installation de recyclage des déchets radioactifs selon la revendication 1, **caractérisée en ce que** le module de commande de l'évacuation de scories (16) comprend un magnétoscope numérique, un capteur de température pour les scories évacuées, des capteurs de surveillance optique situés à l'intérieur du réservoir de réception des scories fondues ; un système d'alarme lumineuse ayant des colonnes lumineuses et un bouton d'urgence.

3. Installation de recyclage des déchets radioactifs selon l'une des revendications précédentes,
**caractérisée en ce que** le module de commande de l'environnement intérieur (17) comprend au moins des capteurs de température, de pression, de débit et de raréfaction, à savoir un capteur de chaque catégorie.

4. Installation de recyclage des déchets radioactifs selon l'une des revendications précédentes,
**caractérisée en ce que** le module de commande de l'état de l'équipement (18) comprend au moins un transmetteur de position des raccords et un capteur de commande des pompes.

5. Installation de recyclage des déchets radioactifs selon l'une des revendications précédentes,
**caractérisée en ce que** le module d'analyse de gaz (19) comprend les capteurs suivants : des capteurs de mesure de la concentration en gaz d'oxygène, de monoxyde de carbone, de dioxyde de carbone, d'oxyde d'azote, de dioxyde d'azote, de la concentration globale d'oxyde d'azote, de dioxyde de soufre et de la concentration globale d'hydrocarbures, l'emplacement d'installation du module d'analyse de gaz pouvant être choisi de manière à assurer la surveillance de la composition des gaz de pyrolyse dans la cheminée de gaz entre le four à plasma (2) vertical et la chambre de combustion (7), et/ou de manière à assurer la surveillance des gaz de combustion dans la cheminée de gaz entre la chambre de combustion (7) et l'échangeur de chaleur par évaporation (8), et/ou à la sortie de l'installation de recyclage.

6. Installation de recyclage des déchets radioactifs selon l'une des revendications précédentes,
**caractérisée en ce que** le module de commande (15) est équipé d'un dispositif de stockage de données et d'un module de sortie de données sous la forme d'un écran d'affichage, un PC et/ou un contrôleur étant utilisé(s) comme module de commande (15).

7. Installation de recyclage des déchets radioactifs selon l'une des revendications précédentes,
**caractérisée en ce que** les entrées du module de commande (15) sont reliées électriquement aux sorties du module de commande de l'évacuation de scories (16), du module de commande de l'environnement intérieur (17), du module de commande de l'état de l'équipement (18) et au moins à un module d'analyse de gaz (19), les sorties du module de commande (15) étant reliées électriquement aux entrées du matériel électrique de l'équipement suivant : l'unité d'alimentation en déchets (1), le four à plasma (2) vertical, le réservoir (5) de réception des scories fondues, l'unité d'alimentation en air (6) fournissant de l'air au four (2) et à la chambre de combustion (7).

8. Installation de recyclage des déchets radioactifs selon l'une des revendications précédentes,
**caractérisée en ce que** l'unité d'alimentation en déchets (1) est équipée d'un réservoir d'alimentation (20) et d'une bande transporteuse (21) reliée à celui-ci.

9. Installation de recyclage des déchets radioactifs selon l'une des revendications précédentes,
**caractérisée en ce que** l'unité d'alimentation en déchets (1) est équipée d'un réservoir d'alimentation (20) et d'une bande transporteuse d'alimentation (21), le réservoir d'alimentation (20) étant équipé d'au moins un capteur de proximité (22) et d'au moins deux obturateurs coulissants (23) étanches à l'air, d'un écran thermique (24) et d'une goulotte d'alimentation (25).

10. Installation de recyclage des déchets radioactifs selon l'une des revendications précédentes,
**caractérisée en ce que** le four à plasma (2) vertical est équipé de buses à jet centrifuge (26) qui font partie du système de pulvérisation d'urgence et sont installées dans la partie supérieure du four.

11. Installation de recyclage des déchets radioactifs selon l'une des revendications précédentes,
**caractérisée en ce que** la chambre de combustion des gaz de pyrolyse (7) est équipée d'une préchambre (27) et d'un générateur de plasma (28) situé dans le couvercle supérieur de la préchambre (27), ainsi que d'une unité d'alimentation en air supplémentaire (6).

12. Installation de recyclage des déchets radioactifs selon l'une des revendications précédentes,
**caractérisée en ce que** l'unité de purification de gaz (9) est en outre équipée d'un filtre séparateur (29) et d'au moins un filtre fin (30).

13. Installation de recyclage des déchets radioactifs selon l'une des revendications précédentes,
**caractérisée en ce que** le four à plasma (2) vertical et la chambre de combustion de gaz de pyrolyse (7) sont équipés d'un conduit d'évacuation de gaz (33), ayant des vannes d'urgence d'évacuation de gaz (34), et d'un système d'urgence de purification par absorption.

14. Installation de recyclage des déchets radioactifs selon l'une des revendications précédentes,
**caractérisée en ce que** l'unité d'évacuation des scories peut comprendre un bloc d'évacuation ayant un trou central et un bouchon.

15. Installation de recyclage des déchets radioactifs selon l'une des revendications précédentes,
**caractérisée en ce que** le four à plasma (2) vertical présente une conception subdivisée et est équipé d'au moins un générateur de plasma (36), le fondoir (3) du four étant conçu pour pouvoir être déplacé si nécessaire, et la section de raccordement entre l'unité d'évacuation des scories (4) et le réservoir (5) de réception des scories fondues présente une conception subdivisée.
